# EUROPÄISCHE PATENTSCHRIFT

(11) **EP 4 374 212 B1**
(45) Veröffentlichungstag und Bekanntmachung des Hinweises auf die Patenterteilung: **18.06.2025**
(21) Anmeldenummer: 22741439.8
(22) Anmeldetag: 27.06.2022
(51) Int. Cl.: G02B 27/01, E06B 9/26

(54) **LAMELLENANORDNUNG, VERFAHREN ZUR HERSTELLUNG EINER LAMELLENANORDNUNG, ABDECKANORDNUNG MIT EINER LAMELLENANORDNUNG**
LAMELLAE ASSEMBLY, METHOD OF MAKING A LAMELLAE ASSEMBLY, COVER ASSEMBLY WITH A LAMELLAE ASSEMBLY
ENSEMBLE D'LAMELLES, PROCEDE DE FABRICATION D'UN ENSEMBLE D'LAMELLES, ENSEMBLE DE COUVERCLE AVEC UN ENSEMBLE D'LAMELLES

(30) Priorität: 23.07.2021 DE 102021207972; 23.07.2021 DE 102021207976
(43) Veröffentlichungstag der Anmeldung: 29.05.2024
(73) Patentinhaber: Continental Automotive Technologies GmbH, 30175 Hannover (DE)
(72) Erfinder: ZIEMER, Jens, 60488 Frankfurt am Main (DE); DÖBLER, Michael, 60488 Frankfurt am Main (DE); HEBESTREIT, Bjoern, 60488 Frankfurt am Main (DE); TIETZ, Ulrich, 60488 Frankfurt am Main (DE); KISSEL, Robert Wolfgang, 60488 Frankfurt am Main (DE)
(74) Vertreter: Continental Corporation
(86) Internationale Anmeldenummer: PCT/DE2022/200143
(87) Internationale Veröffentlichungsnummer: WO 2023/001343

(56) Entgegenhaltungen:
- DE-A1- 102015 224 939
- DE-A1- 102018 213 061
- DE-B3- 102020 211 662

## Beschreibung

Die vorliegende Erfindung betrifft eine Lamellenanordnung, insbesondere für eine Abdeckanordnung für ein Head-Up-Display, sowie ein Verfahren zur Herstellung einer solchen Lamellenanordnung. Die Erfindung betrifft zudem eine Abdeckanordnung mit einer solchen Lamellenanordnung sowie ein Head-Up-Display, insbesondere ein Head-Up-Display für ein Fortbewegungsmittel, das eine solche Abdeckanordnung aufweist.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. Solange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe des virtuellen Bildes herkömmlicher Head-Up-Displays wird durch die Größe der Optikeinheit begrenzt. Ein Ansatz zur Vergrößerung des virtuellen Bildes besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Bei der aktuell bekannten Auslegung eines derartigen Head-Up-Displays, bei dem der Lichtwellenleiter aus Glasplatten besteht, innerhalb derer Beugungsgitter oder Hologramme angeordnet sind, tritt ein Problem im Fall von Sonneneinstrahlung auf. Das eingestrahlte Sonnenlicht wird im Lichtwellenleiter mehrfach gebrochen und in seine Spektralfarben zerlegt. Diese kommen an zahlreichen Stellen wieder aus dem Lichtwellenleiter heraus und werden unter anderem in Richtung des Auges gebrochen. Dies führt zu regenbogenähnlichen oder kontrastmindernden Qualitätsverlusten. Das eigentliche Bild wird dadurch nur noch schwächer wahrgenommen. Vergleichbare Probleme treten bei anderen Störlichtquellen sowie auch bei direkten Lichtreflexen am Lichtwellenleiter oder an einer Abdeckung einer Optikeinheit auf. Auch bei herkömmlichen Head-Up-Displays ohne Lichtwellenleiter wirken Lichtreflexe aufgrund von Sonneneinstrahlung oder Umgebungslicht störend.

Bei herkömmlichen Geräten werden deshalb Komponenten, an denen möglicherweise Reflexionen auftreten, verkippt und mit Strahlfallen kombiniert, sodass Reflexe den Bereich, in dem das Fahrerauge erwartet wird, nicht erreichen. Alternativ werden Antireflexbeschichtungen verwendet und Strukturrauigkeiten genutzt, um die Reflexintensität zu vermindern.

Das Verkippen der Komponenten kostet erheblich Bauraum, der in Automobilen begrenzt ist. Außerdem ist die Performance der Komponenten bei verkipptem Einbau in der Regel gemindert. Schichten und Strukturen verringern die erreichbare Intensität, die Reflexe bleiben in der Regel aber deutlich sichtbar und verringern den Kontrast erheblich.

Zur Reduzierung von Reflexen kann das Head-Up-Display alternativ mit einer Abdeckanordnung zur Reflexionsminderung versehen werden, die eine Lamellenstruktur bzw. ein Gitter mit einer Vielzahl von Lamellen aufweist. Durch die Lamellen kann einfallendes Störlicht zu einem großen Teil blockiert werden.

In diesem Zusammenhang beschreibt DE 10 2014 214 510 A1 eine Anordnung zur Reflexionsminderung für eine Frontscheibenanzeigeeinrichtung für ein Kraftfahrzeug. Die Anordnung umfasst eine transparente Abdeckscheibe zum Schutz einer Projektionseinrichtung sowie ein Abschirmgitter mit flächigen senkrecht oder geneigt zu einer Oberfläche der Abdeckscheibe angeordneten Gitterelementen einer Gitterstruktur.

Zur weiteren Verbesserung der Unterdrückung von Störlicht können anstelle einer starren Lamellenanordnung verstellbare Lamellen verwendet werden, deren Stellwinkel basierend auf der Kopfposition des Betrachters nachgeführt wird.

Beispielsweise beschreibt DE 10 2017 219 069 A1 eine Abdeckanordnung zur Reflexionsminderung für eine Blickfeldanzeigevorrichtung für ein Kraftfahrzeug. Die Abdeckanordnung umfasst eine transparente Deckscheibe zum Schutz einer Projektionseinheit der Blickfeldanzeigevorrichtung und eine dynamische Abschirmstruktur, die mehrere entlang einer Oberfläche der Deckscheibe verteilte flächige Lamellen umfasst. Die Neigungswinkel der Lamellen zu einer Oberflächennormalen der Deckscheibe sind dynamisch einstellbar.

Die Herstellung einer derartigen Lamellenanordnung ist allerdings mit einem erheblichen Aufwand verbunden, insbesondere wenn die Lamellen sehr dünn ausfallen sollen. Eine typische Materialstärke der Lamellen liegt je nach Material im Bereich von 20 µm bis 30 µm.

Aus DE 10 2018 213 061 A1 ist ein Gerät zum Generieren eines virtuellen Bildes mit Störlichtunterdrückung bekannt. Aus DE 10 2020 211 662 B3 ist ein Gerät zum Generieren eines virtuellen Bildes mit einem Verstellmechanismus für Entspiegelungslamellen bekannt. Aus DE 10 2015 224 939 A1 ist eine Anordnung zur Reflexminderung für eine Frontscheibenanzeigeeinrichtung für ein Kraftfahrzeug bekannt.

Es ist Aufgabe der vorliegenden Erfindung, verbesserte Lösungen für eine Lamellenanordnung für eine Abdeckanordnung für ein Head-Up-Display bereitzustellen.

Diese Aufgabe wird durch eine Lamellenanordnung mit den Merkmalen des Anspruchs 1 sowie durch ein Verfahren gemäß Anspruch 5 zur Herstellung einer solchen Lamellenanordnung gelöst. Bevorzugte Ausgestaltungen der Erfindung sind Gegenstand der abhängigen Ansprüche.

Gemäß einem ersten Aspekt der Erfindung weist eine Lamellenanordnung auf:
- eine erste Zahnstange mit einer Mehrzahl von Zähnen;
- eine auf der ersten Zahnstange angeordnete erste Deckelzahnleiste mit einer Mehrzahl von Zähnen;
- eine zweite Zahnstange mit einer Mehrzahl von Zähnen;
- eine auf der zweiten Zahnstange angeordnete zweite Deckelzahnleiste mit einer Mehrzahl von Zähnen; und
- eine Mehrzahl von Lamellen, die zwischen den Zähnen der Zahnstangen und der Deckelzahnleisten befestigt sind.

Bei der erfindungsgemäßen Lamellenanordnung sind die Lamellen beidseitig an ihren Enden zwischen einer Zahnstange und einer zugehörigen Deckelzahnleiste befestigt. Die Zähne der Zahnstange bzw. der Deckelzahnleiste legen dabei die genaue Anordnung der Lamellen fest. Vorzugsweise weisen die Lamellen über die gesamte Länge der Zahnstange einen konstanten Abstand und einen konstanten Neigungswinkel auf. Selbstverständlich können beide bei Bedarf aber auch über die Länge der Zahnstange variieren.

Gemäß einem Aspekt der Erfindung sind die Zahnstangen, die Deckelzahnleisten und die Lamellen miteinander verklebt. Auf diese Weise bilden die Zahnstange und die zugehörige Deckelzahnleiste jeweils eine verklebte Einheit, in die die Enden der Lamellen eingebettet sind. Dies erleichtert die Handhabung der Lamellenanordnung bei einer nachfolgenden Montage in einem Rahmen einer Abdeckanordnung.

Gemäß einem Aspekt der Erfindung weisen die erste Zahnstange und die zweite Zahnstange Befestigungselemente für Stützleisten auf. Die Stützleisten können ihrerseits in einem Rahmen einer Abdeckanordnung montiert werden. Durch die Verwendung angepasster Stützleisten wird dabei die Montage der Lamellenanordnung in unterschiedlichen Abdeckanordnungen ermöglicht.

Gemäß einem Aspekt der Erfindung sind die Lamellen elastisch ausgestaltet. Auf diese Weise besteht die Möglichkeit, den Neigungswinkel der Lamellen nach der Montage in einer Abdeckanordnung durch geeignete Stellelemente zu verstellen. Insbesondere können die Lamellen durch eine Kunststofffolie gebildet werden. Vorzugsweise bestehen die Lamellen aus einem Polyimid.

Gemäß einem weiteren Aspekt der Erfindung umfasst ein Verfahren zur Herstellung einer erfindungsgemäßen Lamellenanordnung die Schritte:
- Befestigen einer ersten Zahnstange und einer zweiten Zahnstange auf einem inneren Hilfsrahmen;
- Befestigen einer Mehrzahl von Lamellen an einer ersten Hilfszahnstange und einer zweiten Hilfszahnstange, die auf einem äußeren Hilfsrahmen befestigt sind;
- Einbringen der Mehrzahl von Lamellen in die erste Zahnstange und die zweite Zahnstange unter Verwendung des äußeren Hilfsrahmens;
- Befestigen der Mehrzahl von Lamellen in der ersten Zahnstange und der zweiten Zahnstange unter Verwendung einer ersten Deckelzahnleiste und einer zweiten Deckelzahnleiste;
- Abtrennen der Mehrzahl von Lamellen von der ersten Hilfszahnstange und der zweiten Hilfszahnstange; und
- Lösen der ersten Zahnstange und der zweiten Zahnstange vom inneren Hilfsrahmen.

Bei dem erfindungsgemäßen Verfahren zur Herstellung einer Lamellenanordnung wird eine Hilfskonstruktion aus einem äußeren Hilfsrahmen und darauf befestigten Hilfszahnstangen genutzt, um die Lamellen vor der Montage in eine definierte Lage zu bringen. Der äußere Hilfsrahmen wird dann so in Bezug auf den inneren Hilfsrahmen platziert, dass die Lamellen zwischen den Zähnen der Zahnstangen zu liegen kommen. Dort können die Lamellen im Anschluss unter Verwendung von Deckelzahnleisten befestigt und schließlich von den Hilfszahnstangen abgetrennt werden. Dies hat den Vorteil, dass die Lamellen gleichmäßig auf die Zahnstangen übertragen werden. Nach dem Lösen der Zahnstangen vom inneren Hilfsrahmen kann die Lamellenanordnung weiterverarbeitet werden.

Gemäß einem Aspekt der Erfindung werden die Zahnstangen, die Deckelzahnleisten und die Lamellen miteinander verklebt. Auf diese Weise bilden die Zahnstange und die zugehörige Deckelzahnleiste jeweils eine verklebte Einheit, in die die Enden der Lamellen eingebettet sind. Dies erleichtert die Handhabung der Lamellenanordnung bei einer nachfolgenden Montage in einem Rahmen einer Abdeckanordnung.

Gemäß einem Aspekt der Erfindung werden die Lamellen vor dem Befestigen an den Hilfszahnstangen mit definierten Gewichten gespannt. Auf diese Weise haben alle Lamellen exakt die gleiche Vorspannung, wenn sie an den Hilfszahnstangen und nachfolgend zwischen den Zahnstangen und den Deckelzahnleisten befestigt werden. Nach einer Montage der Lamellenanordnung in einem Rahmen einer Abdeckanordnung ist so gewährleistet, dass zur Verstellung der Neigung der Lamellen eine definierte Kraft benötigt wird.

Gemäß einem Aspekt der Erfindung werden die Lamellen mit den Hilfszahnstangen verklebt. Auf diese Weise ist sichergestellt, dass die Lamellen ihre definierte Anordnung und Vorspannung beim Einbringen in die Zahnstangen sicher beibehalten.

Vorzugsweise weist eine Abdeckanordnung, insbesondere eine Abdeckanordnung für ein Head-Up-Display, eine erfindungsgemäße Lamellenanordnung auf. Eine solche Abdeckanordnung wird vorzugsweise in einem Head-Up-Display für ein Fortbewegungsmittel eingesetzt, z.B. in einem Head-Up-Display für ein Kraftfahrzeug. Eine erfindungsgemäße Lamellenanordnung kann aber auch in anderen Anwendungsbereichen zum Einsatz kommen, bei denen eine Reflexionsvermeidung wünschenswert ist, beispielsweise in militärische Anwendungen, z.B. zur Reflexionsvermeidung für Zielfernrohre, oder zur Reflexionsvermeidung für Kameras und Überwachungskameras. Weiterhin lässt sich die erfindungsgemäße Lösung auch anwenden als Sichtschutz für Displays, d.h. als Privatsphärenfilter, oder als Sichtschutz für Fenster/Lichtkuppelfenster.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch die Funktionsweise einer Abdeckanordnung mit Lamellen;
- Fig. 6: zeigt einen vergrößerten Ausschnitt einer Abdeckanordnung;
- Fig. 7: zeigt eine Schrägansicht einer erfindungsgemäßen Lamellenanordnung;
- Fig. 8: zeigt eine Seitenansicht der erfindungsgemäßen Lamellenanordnung;
- Fig. 9: zeigt schematisch ein Verfahren zur Herstellung einer erfindungsgemäßen Lamellenanordnung;
- Fig. 10: zeigt die Verwendung von Hilfsrahmen bei der Herstellung einer erfindungsgemäßen Lamellenanordnung; und
- Fig. 11: zeigt die fertige Lamellenanordnung vor dem Lösen von einem inneren Hilfsrahmen.
- Fig. 12: zeigt eine Integration der Lamellenanordnung aus Fig. 7 in eine Abdeckanordnung;
- Fig. 13: zeigt einen Schnitt durch die Abdeckanordnung aus Fig. 12;
- Fig. 14: veranschaulicht die Funktionsweise eines Verstellelements für die Lamellen der Lamellenanordnung; und
- Fig. 15: zeigt eine Mehrzahl von Stellgliedern, die durch einen gemeinsamen Anguss gruppiert sind.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

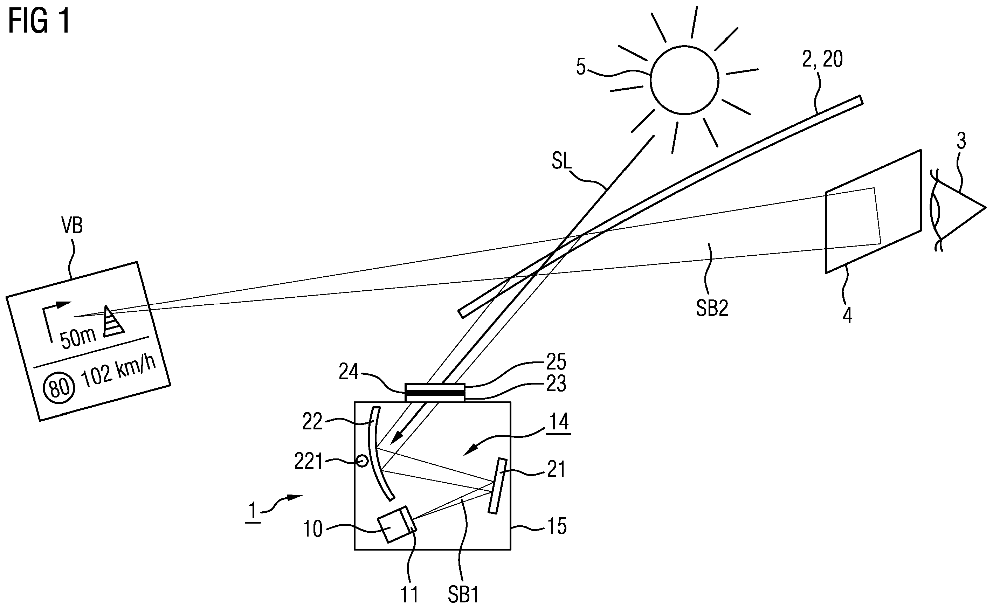

Zunächst soll anhand der Figuren 1 bis 4 der Grundgedanke eines Head-Up-Displays mit Lichtwellenleiter dargelegt werden.

Fig. 1 zeigt eine Prinzipskizze eines herkömmlichen Head-Up-Displays für ein Kraftfahrzeug. Das Head-Up-Display weist eine Anzeigevorrichtung 1 mit einer bildgebenden Einheit 10 und einer Optikeinheit 14 auf. Von einem Anzeigeelement 11 geht ein Strahlenbündel SB1 aus, welches von einem Faltspiegel 21 auf einen gekrümmten Spiegel 22 reflektiert wird, der es in Richtung einer Spiegeleinheit 2 reflektiert. Die Spiegeleinheit 2 ist hier als Windschutzscheibe 20 des Kraftfahrzeugs dargestellt. Von dort gelangt das Strahlenbündel SB2 in Richtung eines Auges eines Betrachters 3.

Der Betrachter 3 sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 14 und Spiegeleinheit 2 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge des Betrachters 3 innerhalb einer durch ein Rechteck angedeuteten Eyebox 4 befindet, sind alle Elemente des virtuellen Bildes VB für den Betrachter 3 sichtbar. Befindet sich das Auge des Betrachters 3 außerhalb der Eyebox 4, so ist das virtuelle Bild VB für den Betrachter 3 nur noch teilweise oder gar nicht sichtbar. Je größer die Eyebox 4 ist, desto weniger eingeschränkt ist der Betrachter bei der Wahl seiner Sitzposition.

Die Krümmung des gekrümmten Spiegels 22 ist an die Krümmung der Windschutzscheibe 20 angepasst und sorgt dafür, dass die Bildverzeichnung über die gesamte Eyebox 4 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 4 und somit eine Anpassung der Position der Eyebox 4 an die Position des Betrachters 3. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 14 dennoch kompakt ausfällt. Die bildgebende Einheit 10 und die Optikeinheit 14 werden durch ein Gehäuse 15 mit einer transparenten Abdeckscheibe 23 gegen die Umgebung abgegrenzt. Die optischen Elemente der Optikeinheit 14 sind somit beispielsweise gegen im Innenraum des Fahrzeugs befindlichen Staub geschützt. Auf der Abdeckscheibe 23 kann sich weiterhin eine optische Folie bzw. ein Polarisator 24 befinden. Das Anzeigeelement 11 ist typischerweise polarisiert und die Spiegeleinheit 2 wirkt wie ein Analysator. Zweck des Polarisators 24 ist es daher, die Polarisation zu beeinflussen, um eine gleichmäßige Sichtbarkeit des Nutzlichts zu erzielen. Eine auf der Abdeckscheibe 23 angeordnete Abdeckanordnung 25 dient dazu, das über die Grenzfläche der Abdeckscheibe 23 reflektierte Licht sicher zu absorbieren, sodass keine Blendung des Betrachters hervorgerufen wird. Außer dem Sonnenlicht SL kann auch das Licht einer anderen Störlichtquelle 5 auf das Anzeigeelement 11 gelangen. In Kombination mit einem Polarisationsfilter kann der Polarisator 24 zusätzlich auch genutzt werden, um einfallendes Sonnenlicht SL zu reduzieren.

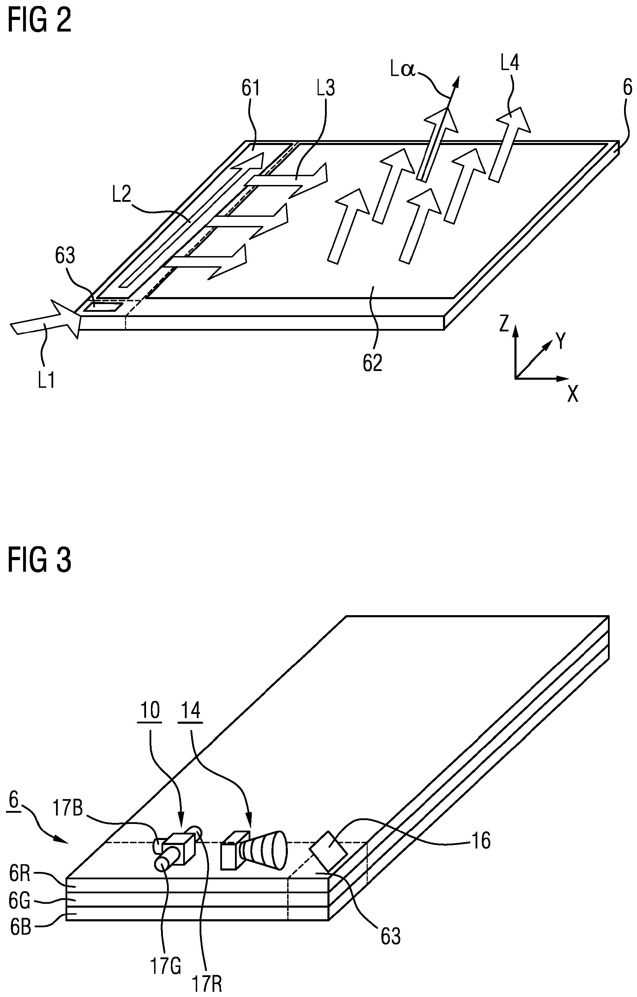

Fig. 2 zeigt in schematischer räumlicher Darstellung einen Lichtwellenleiter 6 mit zweidimensionaler Vergrößerung. Im unteren linken Bereich erkennt man ein Einkoppelhologramm 63, mittels dessen von einer nicht dargestellten bildgebenden Einheit kommendes Licht L1 in den Lichtwellenleiter 6 eingekoppelt wird. In diesem breitet es sich in der Zeichnung nach rechts oben aus, entsprechend dem Pfeil L2. In diesem Bereich des Lichtwellenleiters 6 befindet sich ein Falthologramm 61, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 6 befindet sich ein Auskoppelhologramm 62, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 6 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 6 in einer Lichtrichtung Lα verlässt.

Fig. 3 zeigt in räumlicher Darstellung ein Head-Up-Display mit drei Lichtwellenleitern 6R, 6G, 6B, die übereinanderliegend angeordnet sind und für je eine Elementarfarbe Rot, Grün und Blau stehen. Sie bilden gemeinsam den Lichtwellenleiter 6. Die in dem Lichtwellenleiter 6 vorhandenen Hologramme 61, 62, 63 sind wellenlängenabhängig, sodass jeweils ein Lichtwellenleiter 6R, 6G, 6B für eine der Elementarfarben verwendet wird. Oberhalb des Lichtwellenleiters 6 sind schematisch eine bildgebende Einheit 10 und eine Optikeinheit 14 dargestellt. Die Optikeinheit 14 weist einen Spiegel 16 auf, der das von der bildgebenden Einheit 10 erzeugte und von der Optikeinheit 14 geformte Licht in Richtung des jeweiligen Einkoppelhologramms 63 umlenkt. Die bildgebende Einheit 10 weist drei Lichtquellen 17R, 17G, 17B für die drei Elementarfarben auf. Man erkennt, dass die gesamte dargestellte Einheit eine im Vergleich zu ihrer lichtabstrahlenden Fläche geringe Gesamtbauhöhe aufweist.

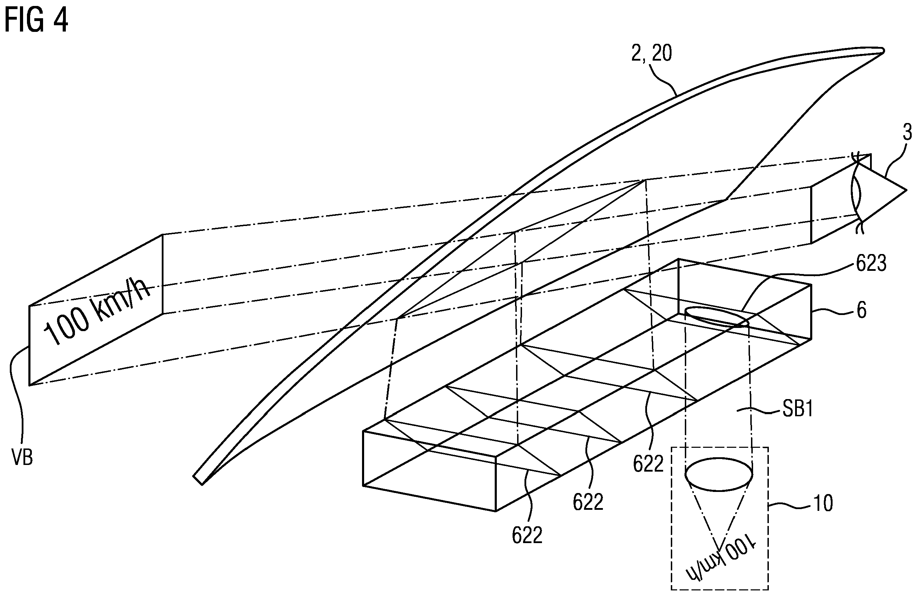

Fig. 4 zeigt ein Head-Up-Display in einem Kraftfahrzeug ähnlich zu Fig. 1, hier allerdings in räumlicher Darstellung und mit einem Lichtwellenleiter 6. Man erkennt die schematisch angedeutete bildgebende Einheit 10, die ein paralleles Strahlenbündel SB1 erzeugt, welches mittels der Spiegelebene 623 in den Lichtwellenleiter 6 eingekoppelt wird. Die Optikeinheit ist der Einfachheit halber nicht dargestellt. Mehrere Spiegelebenen 622 reflektieren jeweils einen Teil des auf sie auftreffenden Lichts Richtung Windschutzscheibe 20, der Spiegeleinheit 2. Von dieser wird das Licht Richtung Betrachter 3 reflektiert. Der Betrachter 3 sieht ein virtuelles Bild VB über der Motorhaube bzw. in noch weiterer Entfernung vor dem Kraftfahrzeug. Auch bei dieser Technologie ist die gesamte Optik in einem Gehäuse verbaut, dass von einer transparenten Abdeckung gegen die Umgebung abgegrenzt ist und eine Abdeckanordnung zur Vermeidung von Störlicht aufweist.

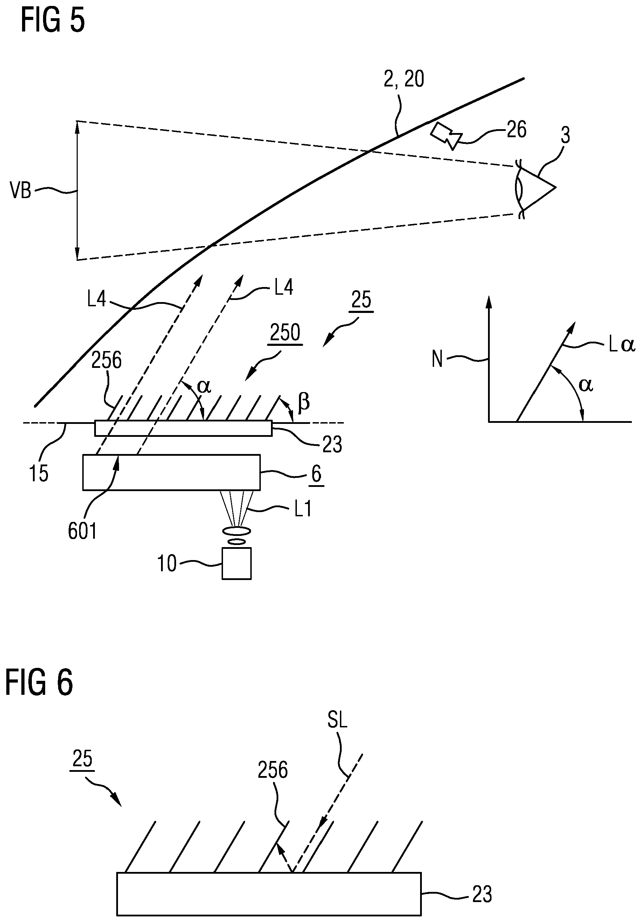

Fig. 5 zeigt schematisch die Funktionsweise einer Abdeckanordnung 25 mit einstellbaren Lamellen 256. Dargestellt ist ein Querschnitt durch die Abdeckanordnung 25, die in diesem Beispiel zusammen mit der Abdeckscheibe 23 in das Gehäuse 15 integriert und oberhalb eines Lichtwellenleiters 6 angeordnet ist. Eine bildgebende Einheit 10 koppelt ein Lichtbündel L1 in den Lichtwellenleiter 6 ein. An dessen oberer Begrenzungsfläche 601 treten vervielfachte Lichtbündel L4 unter einem Hauptrichtungswinkel α aus. Die durch den Hauptrichtungswinkel α definierte Lichtrichtung Lα weicht von der Richtung N der Normalen des Lichtwellenleiters 6 bzw. des Gehäuses 15 ab. Die Lichtbündel L4 werden von der als Spiegeleinheit 2 dienenden Windschutzscheibe 20 reflektiert und gelangen in das Auge des Betrachters 3, der somit ein virtuelles Bild VB sieht. Dieses ist hier aus Platzgründen unverhältnismäßig nahe an der Windschutzscheibe 20 angedeutet. Die Abdeckanordnung 25 umfasst eine Lamellenanordnung 250 mit einer Vielzahl schräggestellter Lamellen 256, die entsprechend der Lichtrichtung Lα ausgerichtet sind, d.h. deren Neigungswinkel β an die Lichtrichtung Lα angepasst ist. Der Neigungswinkel β ist mittels eines nicht dargestellten Einstellelements einstellbar. Zum Verfolgen einer Position des Betrachters 3 kann ein Eye-Tracking-System 26 verwendet werden.

Fig. 6 zeigt einen vergrößerten Ausschnitt der Abdeckanordnung 25 aus Fig. 5. Zu sehen ist von außen einfallendes Sonnenlicht SL als Störlicht. Dieses kann im Wesentlichen nur in demselben Winkel einfallen, in dem auch die Lamellen 256 geneigt sind. Es wird von den Lamellen 256 daher absorbiert, nachdem es von der Abdeckscheibe 23 reflektiert worden ist.

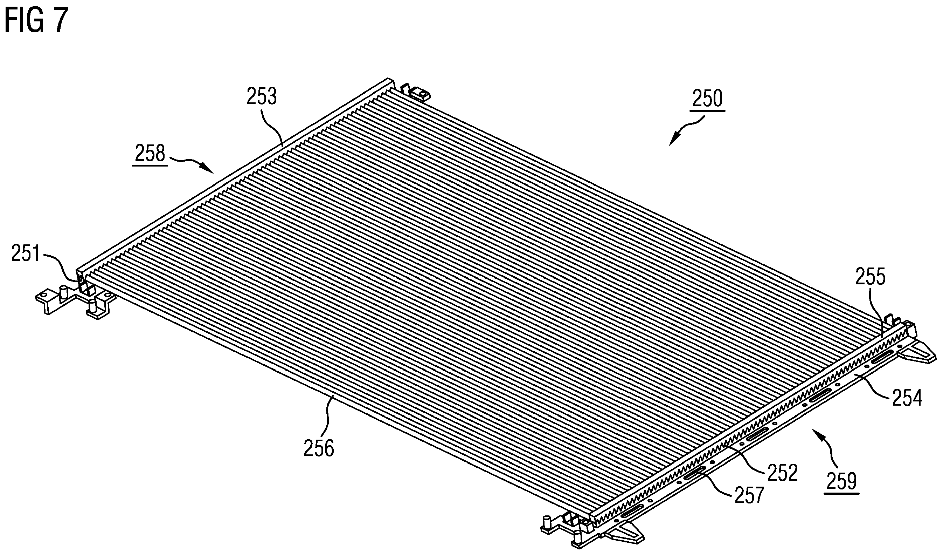

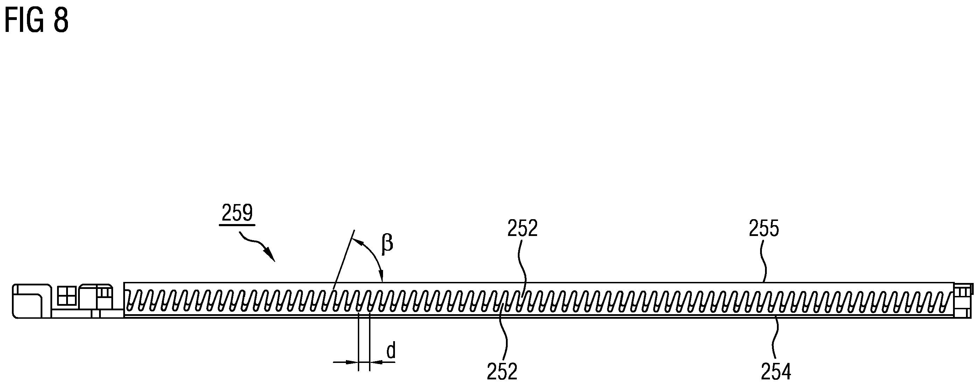

Fig. 7 und Fig. 8 zeigen eine Schrägansicht und eine Seitenansicht einer erfindungsgemäßen Lamellenanordnung 250. Die Lamellenanordnung 250 weist eine erste Zahnstange 251 mit einer Mehrzahl von Zähnen 252 und eine auf der ersten Zahnstange 251 angeordnete erste Deckelzahnleiste 253 mit einer Mehrzahl von Zähnen 252 auf. Die Lamellenanordnung 250 weist zudem eine zweite Zahnstange 254 mit einer Mehrzahl von Zähnen 252 und eine auf der zweiten Zahnstange 254 angeordnete zweite Deckelzahnleiste 255 mit einer Mehrzahl von Zähnen 252 auf. Zwischen den Zähnen 252 der Zahnstangen 251, 254 und der Deckelzahnleisten 253, 255 sind eine Mehrzahl von Lamellen 256 befestigt. Insbesondere können die Zahnstangen 251, 254, die Deckelzahnleisten 253, 255 und die Lamellen 256 miteinander verklebt sein und ein erstes Endstück 258 und ein zweites Endstück 259 bilden. Vorzugsweise werden die Lamellen 256 durch eine Kunststofffolie gebildet, z.B. eine Polyimidfolie. Für die Befestigung von Stützleisten für die Montage in einer Abdeckanordnung können die erste Zahnstange 251 und die zweite Zahnstange 254 Befestigungsabschnitte 257 aufweisen. Im gezeigten Beispiel weisen die Lamellen 256 über die gesamte Länge der Zahnstange 251 einen konstanten Abstand d und einen konstanten Neigungswinkel β auf. Selbstverständlich können beide bei Bedarf aber auch über die Länge der Zahnstange 251 variieren.

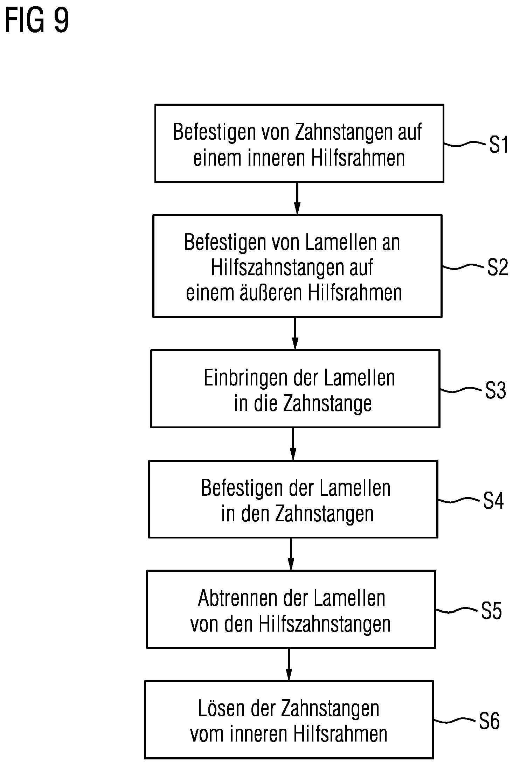

Fig. 9 zeigt schematisch ein Verfahren zur Herstellung einer erfindungsgemäßen Lamellenanordnung. Zunächst werden eine erste Zahnstange und eine zweite Zahnstange auf einem inneren Hilfsrahmen befestigt S1. Anschließend werden eine Mehrzahl von Lamellen an einer ersten Hilfszahnstange und einer zweiten Hilfszahnstange befestigt S2. Die beiden Hilfszahnstangen sind auf einem äußeren Hilfsrahmen befestigt. Vorzugsweise werden die Lamellen vor dem Befestigen an den Hilfszahnstangen mit definierten Gewichten gespannt und dann mit den Hilfszahnstangen verklebt. Die Lamellen werden anschließend unter Verwendung des äußeren Hilfsrahmens in die erste Zahnstange und die zweite Zahnstange eingebracht S3. Unter Verwendung einer ersten Deckelzahnleiste und einer zweiten Deckelzahnleiste werden die Lamellen dann in den Zahnstangen befestigt S4. Vorzugsweise werden die Zahnstangen, die Deckelzahnleisten und die Lamellen dazu miteinander verklebt. Im Anschluss werden die Lamellen von den Hilfszahnstangen abgetrennt S5. Schließlich werden die Zahnstangen vom inneren Hilfsrahmen gelöst S6.

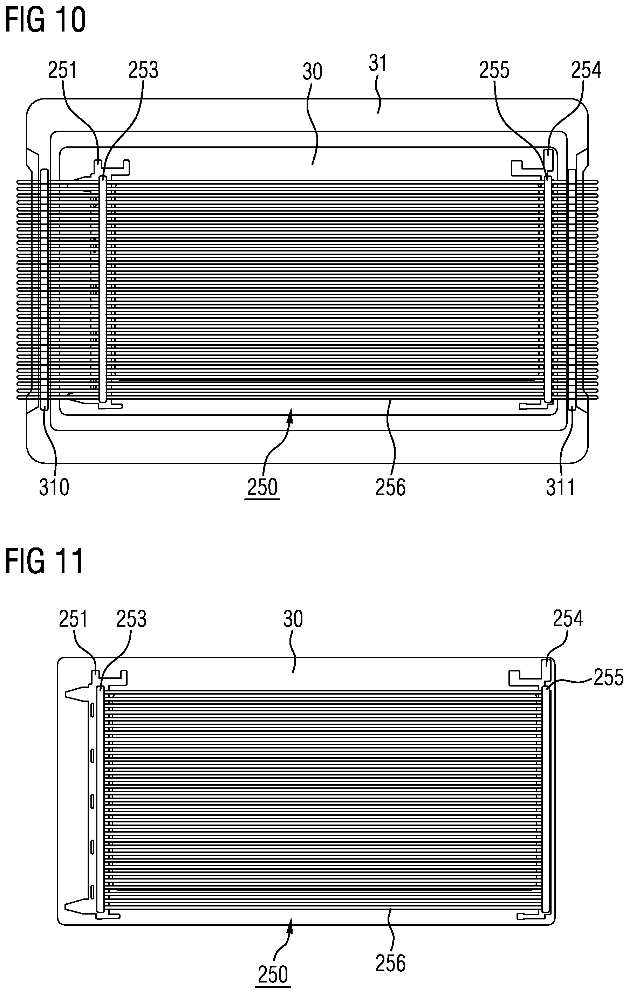

Fig. 10 zeigt die Verwendung von Hilfsrahmen 30, 31 bei der Herstellung einer erfindungsgemäßen Lamellenanordnung 250. Zwei Hilfszahnstangen 310, 311 werden auf einem äußeren Hilfsrahmen 31 befestigt. Die Lamellen 256 werden dann unter Spannung in den äußeren Hilfsrahmen 31 auf die Hilfszahnstangen 310, 311 geklebt. Zwei Zahnstangen 251, 254 zur Aufnahme der Lamellen 256 werden auf einem inneren Hilfsrahmen 30 befestigt. Der äußere Hilfsrahmen 31 mit den gespannten Lamellen 256 wird dann über den inneren Hilfsrahmen 30 gelegt und die gespannten Lamellen 256 auf die Zahnstangen 251, 254 übertragen oder geklebt. Im Anschluss werden Deckelzahnleisten 253, 255 auf die Zahnstangen 251, 254 aufgesetzt und mit diesen verklebt. Die Lamellen befinden sich nun im Sandwich zwischen Zahnstange 251, 254 und Deckelzahnleiste 253, 255.

Fig. 11 zeigt die fertige Lamellenanordnung 250 vor dem Lösen vom inneren Hilfsrahmen 30. Nach der Befestigung der Lamellen 256 zwischen den Zahnstangen 251, 254 und den Deckelzahnleisten 253, 255 werden die Lamellen 256 abgetrennt. Die Lamellen 256 sind nun gleichmäßig auf die Zahnstangen 251, 254 übertragen. Abschließend müssen die Zahnstangen 251, 254 nur noch vom inneren Hilfsrahmen 30 gelöst werden.

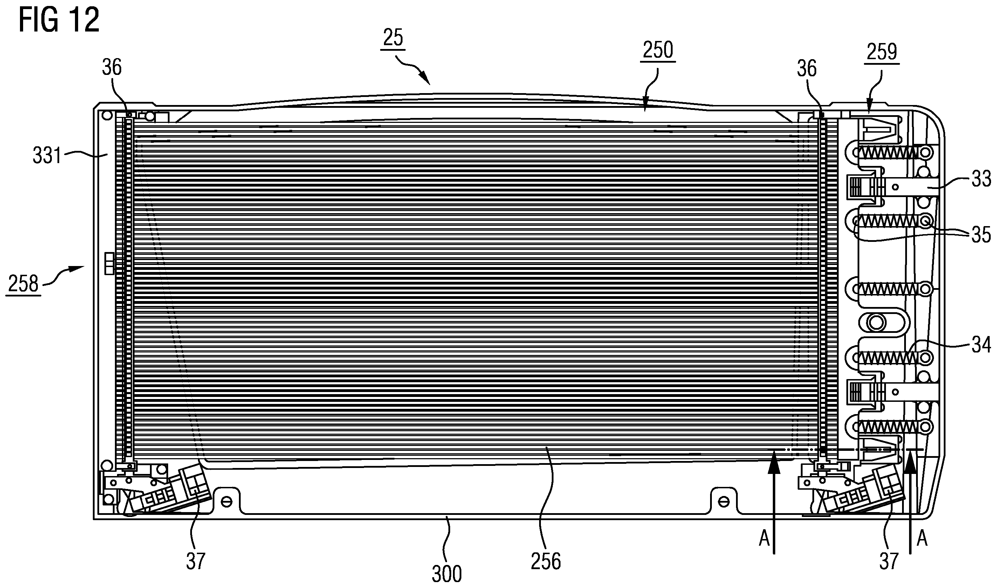

Fig. 12 zeigt eine Integration der Lamellenanordnung 250 aus Fig. 7 in eine Abdeckanordnung 25. Die Abdeckanordnung 25 weist einen Rahmen 300 auf, auf dem die beiden Endstücke 258, 259 befestigt werden können. Im dargestellten Beispiel wird das erste Endstück 258 mit einer ersten Stützleiste 331 auf dem Rahmen 300 befestigt, beispielsweise durch Verklebung oder Verschraubung, und bildet so ein Festlager für die Lamellen 256. Alternativ kann auf die erste Stützleiste 331 verzichtet und das erste Endstück 258 direkt auf dem Rahmen 300 befestigt werden. Das zweite Endstück 259 wird hingegen federgespannt befestigt und bildet ein Loslager für die Lamellen 256. Dazu wird das zweite Endstück 259 zunächst mit einer zweiten Stützleiste 32 verschraubt, verstiftet oder verklebt. Die Einheit aus zweitem Endstück 259 und zweiter Stützleiste 32 wird auf den Rahmen 300 aufgelegt und mit Federn 33 niedergehalten. Im dargestellten Beispiel werden zwei Federn 33 verwendet, es kann aber auch eine andere Anzahl Federn 33 genutzt werden. Anstelle von Federn 33 können zudem auch andere Möglichkeiten zum Niederhalten herangezogen werden, z.B. seitliche Führungen für die zweite Stützleiste 32 oder eine bewegliche Befestigung unter Verwendung von Langlöchern in der zweiten Stützleiste 32. Die Lamellen 256 werden im Anschluss durch Zugfedern 34 gespannt, die an Befestigungspunkten 35 der zweiten Stützleiste 32 und des Rahmens 300 befestigt sind. Im dargestellten Beispiel werden fünf Zugfedern 34 verwendet, es kann aber auch eine andere Anzahl Zugfedern 34 genutzt werden. Zum Verstellen der Neigung der Lamellen 256 weist die Abdeckanordnung 25 Verstellelemente 36 auf, die durch Schrittmotoren 37 betätigt werden.

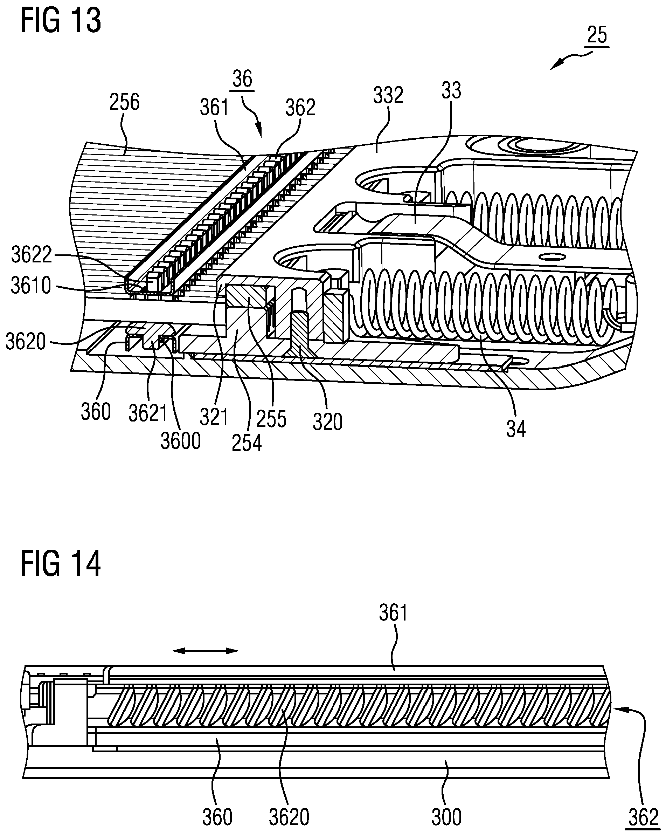

Fig. 13 zeigt einen Schnitt durch die Abdeckanordnung 25 aus Fig. 12 entlang der Linie A-A. Die zweite Stützleiste 332 ist mittels einer Schraube 320 mit der der zweiten Zahnstange 254 verschraubt. Wie beschrieben bilden die zweite Zahnstange 254 und die zweite Deckelzahnleiste 255 durch die Verklebung eine Einheit. Die zweite Stützleiste 332 umgreift bei der dargestellten Ausführungsform die zweite Deckelzahnleiste 255. Zu diesem Zweck weist die zweite Stützleiste 332 einen übergreifenden Abschnitt 321 auf. Die Zugkraft der Zugfedern 34 wird in die steife zweite Stützleiste 332 übertragen. Die Kraft überträgt sich einerseits über die Verhakung auf die zweite Deckelzahnleiste 255 und über die Verschraubung auf die zweite Zahnstange 254. Dadurch wird die Verklebung der Lamellen 256 im Sandwich zentral belastet. Die Federn ziehen in der Mitte der Lamellen 256. Die daraus resultierende Spannung der Lamellen 256 schützt die Lamellen 256 vor Vibration. Zudem wird durch die federgespannte Befestigung ein Ausgleich von temperaturbedingten Änderungen der Längenausdehnung der Lamellen 256 gewährleistet.

Wie in Fig. 13 gut zu sehen ist, umfasst das Verstellelement 36 eine untere Lochleiste 360, eine obere Lochleiste 361 und eine Mehrzahl von Stellgliedern 362. Jeder Lamelle 256 ist dabei ein Stellglied 362 des Verstellelements 36 zugeordnet. Die Stellglieder 362 weisen jeweils einen Grundkörper 3620 sowie einen unteren Fortsatz 3621 und einen oberen Fortsatz 3622 auf. Der untere Fortsatz 3621 greift in eine zugeordnete Aussparung 3600 der unteren Lochleiste 360 ein, der obere Fortsatz 3622 in eine zugeordnete Aussparung 3610 der oberen Lochleiste 361. Die Aussparungen 3600, 3610 der Lochleisten 360, 361 sind vorzugsweise rechteckig ausgestaltet. Die rechteckige Ausgestaltung sorgt im Zusammenspiel mit einem im wesentlichen rechteckigen Querschnitt des unteren Fortsatzes 3621 und des oberen Fortsatzes 3622 dafür, dass die Stellglieder 362 eine definierte Ausrichtung in Bezug auf die Lochleisten 360, 361 haben und ein Verdrehen der Stellglieder 362 relativ zu den Lochleisten 360, 361 nicht möglich ist.

Einer der ersten Montageschritte der Abdeckanordnung 25 besteht darin, dass die untere Lochleiste 360 fest mit dem Rahmen 300 verbunden wird. Danach wird die Lamellenanordnung 250 aufgelegt und die Lamellen 256 werden wie oben beschrieben gespannt. Nun werden die Stellglieder 362 so zwischen die gespannten Lamellen 256 platziert, dass ihr unterer Fortsatz 3621 jeweils in die zugehörige Aussparung 3600 der unteren Lochleiste 360 eingreift. Dazu ist es vorteilhaft, wenn Gruppen von Stellgliedern 362 oder sogar alle Stellglieder 362 durch einen gemeinsamen Anguss gruppiert sind. Dieser kann beispielsweise seitlich am oberen Ende des Grundkörpers 3620 angeordnet sein. Im Anschluss wird die obere Lochleiste 361 derart aufgesetzt, dass der obere Fortsatz 3622 der Stellglieder 362 jeweils in die zugehörige Aussparung 3610 der oberen Lochleiste 361 eingreift. Schließlich werden die Stellglieder 362 durch Abbrechen des Angusses separiert. Die untere Lochleiste 360 ist vorzugsweise derart auf dem Rahmen 300 angeordnet, dass die Lamellen 256 nach der Montage jeweils an einer Seite des Grundkörpers 3620 anliegen. Durch das Anliegen der Lamellen 256 am Grundkörper 3620 kann die Form der Lamellen 256 in Querrichtung gezielt beeinflusst werden. Wenn der Grundkörper 3620 in dem Bereich, in dem die zugehörige Lamelle 256 anliegt, eben ausgestaltet ist, so hat auch die Lamelle 256 eine ebene Oberfläche.

Fig. 14 veranschaulicht die Funktionsweise des Verstellelements 36 für die Lamellen der Lamellenanordnung. Die untere Lochleiste 360 ist fest auf dem Rahmen 300 angeordnet. Zum Einstellen der Neigung wird die obere Lochleiste 361 durch den Schrittmotor horizontal in Längsrichtung, parallel zur unteren Lochleiste 360 verschoben. Diese Verschiebung ist in Fig. 14 durch den Doppelpfeil angedeutet. Durch die Verschiebung werden zugleich alle Stellglieder 362 gekippt. Da die Lamellen elastisch sind, verstellen sie sich entsprechend der Neigung der Stellglieder 362. Vorzugsweise weisen die Grundkörper 3620 der Stellglieder 362 eine konvexe Form auf. Zu diesem Zweck kann bevorzugt die der jeweiligen Lamelle abgewandte Seite des Grundkörpers 3620 gekrümmt ausgestaltet sein. Durch die Krümmung kann der Grundkörper 3620 bei der Verstellung auf der Oberfläche der unteren Lochleiste 360 abrollen, wodurch eine ruckfreie Verstellung gewährleistet ist. Die Stellglieder 362 bzw. die Grundkörper 3620 der Stellglieder 362 sind zudem so ausgestaltet, dass die Lamellen auf den Stellgliedern 362 gleiten können. Auf diese Weise ist die Möglichkeit einer Relativbewegung zwischen den Stellgliedern 362 und den Lamellen gewährleistet, sodass eine Beschädigung der Lamellen, auch über einen langen Zeitraum, verhindert wird.

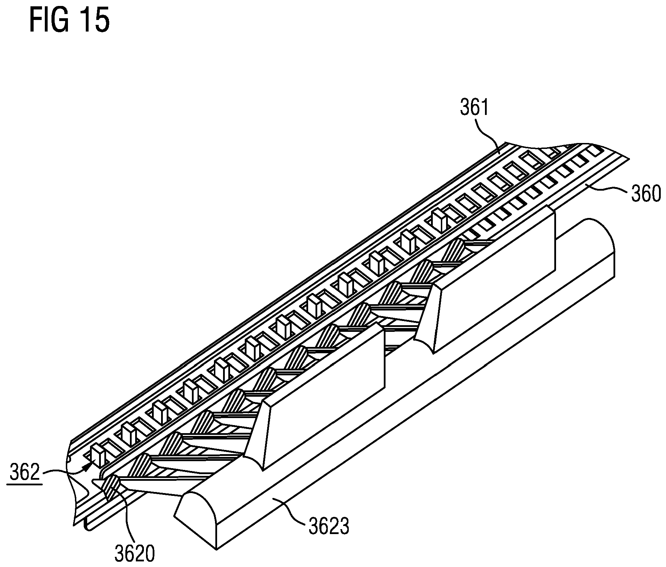

Fig. 15 zeigt eine Mehrzahl von Stellgliedern 362, die zum Zwecke einer einfachen Montage zwischen der unteren Lochleiste 360 und der oberen Lochleiste 361 durch einen gemeinsamen Anguss 3623 gruppiert sind. Der Anguss 3623 ist seitlich am oberen Ende des Grundkörpers 3620 angeordnet, sodass die Reste des Angusses 3623 nach dem Abbrechen die Lamellen nicht berühren. Auf diese Weise ist gewährleistet, dass die Lamellen nicht beschädigt werden.

### Bezugszeichenliste

- 1: Anzeigevorrichtung
- 2: Spiegeleinheit
- 3: Betrachter
- 4: Eyebox
- 5: Störlichtquelle
- 6, 6R, 6G, 6B: Lichtwellenleiter
- 601: Obere Begrenzungsfläche
- 61: Falthologramm
- 62: Auskoppelhologramm
- 622: Spiegelebene
- 623: Spiegelebene
- 63: Einkoppelhologramm

- 10: Bildgebende Einheit
- 11: Anzeigeelement
- 14: Optikeinheit
- 15: Gehäuse
- 16: Spiegel
- 17R, 17G, 17B: Lichtquelle

- 20: Windschutzscheibe
- 21: Faltspiegel
- 22: Gekrümmter Spiegel
- 221: Lagerung
- 23: Abdeckscheibe
- 24: Optische Folie/Polarisator
- 25: Abdeckanordnung
- 250: Lamellenanordnung
- 251: Erste Zahnstange
- 252: Zahn
- 253: Erste Deckelzahnleiste
- 254: Zweite Zahnstange
- 255: Zweite Deckelzahnleiste
- 256: Lamelle
- 257: Befestigungsabschnitt
- 258: Erstes Endstück
- 259: Zweites Endstück
- 26: Eye-Tracking-System

- 30: Innerer Hilfsrahmen
- 300: Rahmen
- 31: Äußerer Hilfsrahmen
- 310: Erste Hilfszahnstange
- 311: Zweite Hilfszahnstange
- 320: Schraube
- 321: Übergreifender Abschnitt
- 33: Feder
- 331: Erste Stützleiste
- 332: Zweite Stützleiste
- 34: Zugfeder
- 35: Befestigungspunkt
- 36: Verstellelement
- 360: Untere Lochleiste
- 3600: Aussparung
- 361: Obere Lochleiste
- 3610: Aussparung
- 362: Stellglied
- 3620: Grundkörper
- 3621: Unterer Fortsatz
- 3622: Oberer Fortsatz
- 3623: Anguss
- 37: Schrittmotor

- α: Hauptrichtungswinkel
- β: Neigungswinkel
- d: Abstand
- L1...L4: Licht
- Lα: Lichtrichtung
- N: Normale
- SB1, SB2: Strahlenbündel
- SL: Sonnenlicht
- VB: Virtuelles Bild

- S1: Befestigen von Zahnstangen auf einem inneren Hilfsrahmen
- S2: Befestigen von Lamellen an Hilfszahnstangen auf einem äußeren Hilfsrahmen
- S3: Einbringen der Lamellen in die Zahnstangen
- S4: Befestigen der Lamellen in den Zahnstangen
- S5: Abtrennen der Lamellen von den Hilfszahnstangen
- S6: Lösen der Zahnstangen vom inneren Hilfsrahmen

## Patentansprüche

1. Lamellenanordnung (250), mit:
- einer ersten Zahnstange (251) mit einer Mehrzahl von Zähnen (252);
- einer auf der ersten Zahnstange (251) angeordneten ersten Deckelzahnleiste (253) mit einer Mehrzahl von Zähnen (252);
- einer zweiten Zahnstange (254) mit einer Mehrzahl von Zähnen (252);
- einer auf der zweiten Zahnstange (254) angeordneten zweiten Deckelzahnleiste (255) mit einer Mehrzahl von Zähnen (252); und
- einer Mehrzahl von Lamellen (256), die zwischen den Zähnen (252) der Zahnstangen (251, 254) und der Deckelzahnleisten (253, 255) befestigt sind.

2. Lamellenanordnung (250) gemäß Anspruch 1, wobei die Zahnstangen (251, 254), die Deckelzahnleisten (253, 255) und die Lamellen (256) miteinander verklebt sind.

3. Lamellenanordnung (250) gemäß Anspruch 1 oder 2, wobei die erste Zahnstange (251) und die zweite Zahnstange (254) Befestigungsabschnitte (257) für Stützleisten aufweisen.

4. Lamellenanordnung (250) gemäß einem der vorherigen Ansprüche, wobei die Lamellen (256) elastisch ausgestaltet sind.

5. Verfahren zur Herstellung einer Lamellenanordnung (250) gemäß einem der vorherigen Ansprüche, mit den Schritten:
- Befestigen (S1) einer ersten Zahnstange (251) und einer zweiten Zahnstange (254) auf einem inneren Hilfsrahmen (30);
- Befestigen (S2) einer Mehrzahl von Lamellen (256) an einer ersten Hilfszahnstange (310) und einer zweiten Hilfszahnstange (311), die auf einem äußeren Hilfsrahmen (31) befestigt sind;
- Einbringen (S3) der Mehrzahl von Lamellen (256) in die erste Zahnstange (251) und die zweite Zahnstange (254) unter Verwendung des äußeren Hilfsrahmens (31);
- Befestigen (S4) der Mehrzahl von Lamellen (256) in der ersten Zahnstange (251) und der zweiten Zahnstange (254) unter Verwendung einer ersten Deckelzahnleiste (253) und einer zweiten Deckelzahnleiste (255);
- Abtrennen (S5) der Mehrzahl von Lamellen (256) von der ersten Hilfszahnstange (310) und der zweiten Hilfszahnstange (311); und
- Lösen (S6) der ersten Zahnstange (251) und der zweiten Zahnstange (254) vom inneren Hilfsrahmen (30).

6. Verfahren gemäß Anspruch 5, wobei die Zahnstangen (251, 254), die Deckelzahnleisten (253, 255) und die Lamellen (256) miteinander verklebt werden.

7. Verfahren gemäß Anspruch 5 oder 6, wobei die Lamellen (256) vor dem Befestigen (S2) an den Hilfszahnstangen (310, 311) mit definierten Gewichten gespannt werden.

8. Verfahren gemäß einem der Ansprüche 5 bis 7, wobei die Lamellen (256) mit den Hilfszahnstangen (310, 311) verklebt werden.

9. Abdeckanordnung (25), mit einer Lamellenanordnung (250) gemäß einem der Ansprüche 1 bis 4.

10. Head-Up-Display für ein Fortbewegungsmittel, mit einer Abdeckanordnung (25) gemäß Anspruch 9.

## Claims

1. Lamella arrangement (250), having:
- a first rack (251) having a plurality of teeth (252);
- a first cover rack strip (253) arranged on the first rack (251) and having a plurality of teeth (252);
- a second rack (254) having a plurality of teeth (252);
- a second cover rack strip (255) arranged on the second rack (254) and having a plurality of teeth (252); and
- a plurality of lamellae (256) which are fastened between the teeth (252) of the racks (251, 254) and the cover rack strips (253, 255).

2. Lamella arrangement (250) according to Claim 1, wherein the racks (251, 254), the cover rack strips (253, 255) and the lamellae (256) are adhesively bonded to one another.

3. Lamella arrangement (250) according to Claim 1 or 2, wherein the first rack (251) and the second rack (254) have fastening portions (257) for support strips.

4. Lamella arrangement (250) according to one of the preceding claims, wherein the lamellae (256) are designed to be elastic.

5. Method for manufacturing a lamella arrangement (250) according to one of the preceding claims, comprising the steps:
- fastening (S1) a first rack (251) and a second rack (254) on an inner subframe (30);
- fastening (S2) a plurality of lamellae (256) to a first auxiliary rack (310) and a second auxiliary rack (311) which are fastened to an outer subframe (31);
- incorporating (S3) the plurality of lamellae (256) into the first rack (251) and the second rack (254) using the outer subframe (31);
- fastening (S4) the plurality of lamellae (256) in the first rack (251) and the second rack (254) using a first cover rack strip (253) and a second cover rack strip (255);
- separating (S5) the plurality of lamellae (256) from the first auxiliary rack (310) and the second auxiliary rack (311); and
- releasing (S6) the first rack (251) and the second rack (254) from the inner subframe (30).

6. Method according to Claim 5, wherein the racks (251, 254), the cover rack strips (253, 255) and the lamellae (256) are adhesively bonded to one another.

7. Method according to Claim 5 or 6, wherein the lamellae (256) are tensioned with defined weights before being fastened (S2) to the auxiliary racks (310, 311).

8. Method according to one of Claims 5 to 7, wherein the lamellae (256) are adhesively bonded to the auxiliary racks (310, 311).

9. Cover assembly (25), having a lamella arrangement (250) according to one of Claims 1 to 4.

10. Head-up display for a means of transport, having a cover assembly (25) according to Claim 9.

## Revendications

1. Ensemble à lamelles (250), comprenant :
- une première barre dentée (251) présentant une pluralité de dents (252) ;
- une première barre dentée de recouvrement (253), agencée sur la première barre dentée (251) et présentant une pluralité de dents (252) ;
- une deuxième barre dentée (254) présentant une pluralité de dents (252) ;
- une deuxième barre dentée de recouvrement (255), agencée sur la deuxième barre dentée (254) et présentant une pluralité de dents (252) ; et
- une pluralité de lamelles (256) qui sont fixées entre les dents (252) des barres dentées (251, 254) et des barres dentées de recouvrement (253, 255).

2. Ensemble à lamelles (250) selon la revendication 1, dans lequel les barres dentées (251, 254), les barres dentées de recouvrement (253, 255) et les lamelles (256) sont collées les unes aux autres.

3. Ensemble à lamelles (250) selon la revendication 1 ou la revendication 2, dans lequel la première barre dentée (251) et la deuxième barre dentée (254) comprennent des portions de fixation (257) pour des barres de support.

4. Ensemble à lamelles (250) selon l'une des revendications précédentes, dans lequel les lamelles (256) sont élastiques.

5. Procédé de fabrication d'un ensemble à lamelles (250) selon l'une des revendications précédentes, comprenant les étapes suivantes :
- fixation (S1) d'une première barre dentée (251) et d'une deuxième barre dentée (254) sur un châssis auxiliaire intérieur (30) ;
- fixation (S2) d'une pluralité de lamelles (256) sur une première barre dentée auxiliaire (310) et une deuxième barre dentée auxiliaire (311) qui sont fixées sur un châssis auxiliaire extérieur (31) ;
- insertion (S3) de la pluralité de lamelles (256) dans la première barre dentée (251) et la deuxième barre dentée (254) en utilisant le châssis auxiliaire extérieur (31) ;
- fixation (S4) de la pluralité de lamelles (256) dans la première barre dentée (251) et la deuxième barre dentée (254) au moyen d'une première barre dentée de recouvrement (253) et d'une deuxième barre dentée de recouvrement (255) ;
- séparation (S5) de la pluralité de lamelles (256) de la première barre dentée auxiliaire (310) et de la deuxième barre dentée auxiliaire (311) ; et
- détachement (S6) de la première barre dentée (251) et de la deuxième barre dentée (254) du châssis auxiliaire interne (30).

6. Procédé selon la revendication 5, dans lequel les barres dentées (251, 254), les barres dentées de recouvrement (253, 255) et les lamelles (256) sont collées les unes aux autres.

7. Procédé selon la revendication 5 ou la revendication 6, dans lequel les lamelles (256) sont tendues avec des poids définis avant d'être fixées (S2) aux barres dentées auxiliaires (310, 311).

8. Procédé selon l'une des revendications 5 à 7, dans lequel les lamelles (256) sont collées aux barres dentées auxiliaires (310, 311).

9. Dispositif de recouvrement (25) avec un ensemble à lamelles (250) selon l'une des revendications 1 à 4.

10. Affichage tête haute pour un moyen de locomotion, comprenant un dispositif de recouvrement (25) selon la revendication 9.
